# EUROPÄISCHE PATENTSCHRIFT

(11) **EP 2 850 722 B1**
(45) Veröffentlichungstag und Bekanntmachung des Hinweises auf die Patenterteilung: **14.06.2017**
(21) Anmeldenummer: 13713871.5
(22) Anmeldetag: 02.04.2013
(51) Int. Cl.: H02K 9/197, H02K 5/20, H02K 9/19

(54) **ELEKTRISCHE MASCHINE**
ELECTRIC MACHINE
MACHINE ÉLECTRIQUE

(30) Priorität: 21.04.2012 DE 102012008209
(43) Veröffentlichungstag der Anmeldung: 25.03.2015
(73) Patentinhaber: Volkswagen Aktiengesellschaft, 38440 Wolfsburg (DE)
(72) Erfinder: LEBERLE, Matthias, 34131 Kassel (DE); BAUM, Markus, 37217 Witzenhausen (DE); STÖHR, Gerd, 29392 Wesendorf (DE); PROKSCHA, Joachim, 34131 Kassel (DE)
(86) Internationale Anmeldenummer: PCT/EP2013/056847
(87) Internationale Veröffentlichungsnummer: WO 2013/156295

(56) Entgegenhaltungen:
- DE-A1- 19 624 519
- US-A1- 2005 268 464

## Beschreibung

Die Erfindung betrifft eine elektrische Maschine, insbesondere für den Hybridantrieb eines Fahrzeugs, mit einem Gehäuse und einem das Gehäuse konzentrisch umschließenden Mantel, wobei sich zwischen dem Gehäuse und dem Mantel ein ringförmiger, flüssigkeitsdicht abgeschlossener und mit einem Kühlmittel durchströmbarer Kühlmantel erstreckt.

Elektrische Maschinen werden als Motor oder Generator in vielen technischen Bereichen eingesetzt, weisen zumeist einen ruhenden Stator bzw. Ständer sowie einen drehbar gelagerten Rotor bzw. Läufer auf und produzieren im Betrieb Abwärme, welche die Effizienz und Lebensdauer der elektrischen Maschine erheblich einschränken kann.

Insbesondere elektrische Maschinen hoher Leistungsdichte benötigen eine Kühlung, welche entweder mit Luft oder mit einem Kühlmittel realisiert ist. Eine Kühlung mit Luft erfordert zur effektiven Abführung der in der elektrischen Maschine entstehenden Abwärme große Flächen, wodurch die Gehäuse eine entsprechende Größe aufweisen müssen. Elektrische Antriebe, die beispielsweise in einem Kraftfahrzeug oder einem Schienenfahrzeug zu dessen elektrischen Fahrbetrieb eingesetzt werden, müssen jedoch zur Optimierung des zur Verfügung stehenden Bauraums möglichst kompakt ausgeführt sein. Eine Luftkühlung scheidet deshalb für derartige elektrische Antriebe in der Regel aus.

Zur Leistungssteigerung und aktiven Kühlung von derartigen elektrischen Maschinen werden insbesondere flüssigkeitsdurchströmte Kühlmäntel eingesetzt. Die bisher bekannten Kühllösungen für elektrische Maschinen beruhen auf radialen oder axialen Durchströmungen eines Kühlmantels bzw. einer Kühlleitung mit einem flüssigen Kühlmittel. Das Kühlmittel entzieht dabei der elektrischen Maschine die Abwärme, sodass ein störungsfreier Betrieb auf hohem Leistungsniveau gewährleistet werden kann. Als Kühlmittel wird üblicherweise ein Gemisch aus Wasser und Glykol oder Öl oder eine andere geeignete Kühlflüssigkeit verwendet. Die Kühlkanäle erstrecken sich beispielsweise parallel zu einer Längsachse eines Gehäuses, welche wiederum parallel zu einer von dem elektrischen Antrieb angetriebenen Welle liegt. Die meist als Bohrungen ausgeführten Kühlmittelkanäle können verteilt über den Umfang des Gehäuses angeordnet sein, wobei hieraus ein entsprechend großes Gehäuse bei dennoch nur geringer Kühlfläche resultiert. Eine Umlenkung des Kühlmittels von einem Kühlmittelkanal zu einem anderen benachbarten Kühlmittelkanal erfolgt meist an den Stirnseiten der elektrischen Maschine bzw. des Gehäuses der elektrischen Maschine in einem mit dem Gehäuse verbundenen separaten Gehäusebauteil. Hierdurch werden die Abmessungen der elektrischen Maschine zusätzlich vergrößert. Außerdem ist in diesem Fall eine aufwendige Abdichtung zwischen den Gehäusebauteilen erforderlich, um einen Kurzschluss durch in das Innere des Gehäuses eintretendes Kühlmittel wirksam zu verhindern. Diese ist insbesondere dann von großer Bedeutung, wenn die elektrische Maschine mit hohen Leistungen betrieben wird. Eine in einem Kraftfahrzeug eingesetzte elektrische Maschine wird oftmals mit Spannungen von bis zu 800 V bei Strömen von bis zu 400 A betrieben. US 2005/0268464 A1 offenbart: Elektrische Maschine, insbesondere für den Hybridantrieb eines Fahrzeugs, mit einem Gehäuse und einem das Gehäuse konzentrisch umschließenden Mantel, wobei sich zwischen dem Gehäuse und dem Mantel ein ringförmiger, flüssigkeitsdicht abgeschlossener und mit einem Kühlmittel durchströmbarer Kühlmantel erstreckt, welcher mit zumindest einem Kühlmittelzufluss und zumindest einem Kühlmittelabfluss derart verbunden ist, dass das Kühlmittel axial in den Kühlmantel einführbar und aus dem Kühlmantel abführbar ist, wobei der Kühlmittelzufluss und der Kühlmittelabfluss in Umfangsrichtung des Gehäuses nebeneinander angeordnet sind, wobei sich in Umfangsrichtung erstreckende Kühlmittelkanäle vorgesehen sind, wobei der zumindest eine Kühlmittelkanal des Rücklaufs und der axial benachbarte Kühlmittelkanal des Vorlaufs gegensinnig durchströmbar sind, wobei der Vorlauf und der Rücklauf jeweils zumindest zwei oder mehrere in axialer Richtung nebeneinander angeordnete Kühlmittelkanäle aufweist, wobei dem zumindest einen Kühlmittelzufluss ein Einführabschnitt zugeordnet ist, welcher sich in axialer Richtung erstreckt, und wobei sich der Umlenkabschnitt in axialer Richtung erstreckt und die Kühlmittelkanäle des Vorlaufs und die Kühlmittelkanäle des Rücklaufs strömungstechnisch verbindet.

Aus der DE 10 2008 040 917 A1 ist bereits eine elektrische Maschine mit einem die elektrische Maschine radial umgebenden, ringförmigen Kühlmantel bekannt. Hierbei wird ein flüssiges Kühlmittel über einen radial angeordneten Kühlmittelzufluss in den Kühlmantel eingeleitet und über einen gegenüber dem Kühlmittelzufluss in Umfangsrichtung des Kühlmantels um 180° versetzt und ebenfalls radial angeordneten Kühlmittelabfluss wieder aus dem Kühlmantel abgeleitet. Durch den radial vom Gehäuse abstehenden Kühlmittelzufluss bzw. -abfluss ergibt sich ein erheblicher zusätzlicher Bedarf an Bauraum für die elektrische Maschine, was insbesondere bei beengten Verhältnissen, beispielsweise in Kraftfahrzeugen, nachteilhaft ist.

Eine weitere Vorrichtung zur Kühlung von Statorblechpaketen elektrischer Maschinen ist in der DE 10 2007 048 683 A1 beschrieben. In einen den Stator umgebenden Kühlmantel wird ein flüssiges Kühlmittel in mehrere gleichmäßig auf dem Umfang verteilt angeordnete Kühlmittelkanäle eingeleitet und in axialer Richtung durch zwei an den Stirnseiten des Stators angeordnete Auslässe aus dem Kühlmantel herausgeführt.

Auch die DE 10 2007 011 699 A1 offenbart bereits eine Vorrichtung zur Wärmeableitung einer als Elektromotor ausgebildeten elektrischen Maschine, welche einen ringförmig zwischen einem Stator und einem Gehäuse angeordneten Kühlmantel umfasst. In dem Kühlmantel zirkuliert ein geeignetes flüssiges Kühlmittel und entzieht der elektrischen Maschine die während des Betriebs entstehende Abwärme.

Eine ähnliche, ebenfalls als Elektromotor ausgebildete elektrische Maschine wird auch in der DE 10 2010 023 948 A1 beschrieben. Zur Kühlung der elektrischen Maschine ist ein mit zwei Anschlüssen in Verbindung stehender Kühlhohlraum vorgesehen, wobei durch die Anschlüsse dem Kühlhohlraum flüssiges Kühlmittel zugeführt oder aus dem Kühlhohlraum entfernt wird.

Schließlich offenbart auch die US 2008/0223557 A1 ein Flüssigkeitskühlsystem einer elektrischen Maschine. Die elektrische Maschine weist einen Kühlhohlraum zur Abführung von Abwärme auf, welchem durch eine radial angeordnete Einlassöffnung Kühlmittel zugeführt und von welchem durch eine ebenfalls radial angeordnete Auslassöffnung Kühlmittel abgeführt wird. Durch den sich in radialer Richtung erstreckenden Einlassstutzen und den am Umfang benachbart angeordneten und sich ebenfalls radial erstreckenden Auslassstutzen ergibt sich ein erhöhter Bauraumbedarf für die elektrische Maschine, welcher insbesondere in Kraftfahrzeugen nicht zur Verfügung steht.

Vor diesem Hintergrund liegt der Erfindung die Aufgabe zugrunde, eine effektive Kühlung für eine elektrische Maschine mit kompakten äußeren Abmessungen zur Verfügung zu stellen.

Diese Aufgabe wird gelöst mit einer elektrischen Maschine gemäß den Merkmalen des Patentanspruchs 1. Die Unteransprüche betreffen besonders zweckmäßige Weiterbildungen der Erfindung.

Erfindungsgemäß ist also eine elektrische Maschine, insbesondere für den Hybridantrieb eines Fahrzeugs, mit einem Gehäuse und einem das Gehäuse konzentrisch umschließenden Mantel vorgesehen, wobei sich zwischen dem Gehäuse und dem Mantel ein ringförmiger, flüssigkeitsdicht abgeschlossener und mit einem Kühlmittel durchströmbarer Kühlmantel erstreckt, welcher mit zumindest einem Kühlmittelzufluss und zumindest einem Kühlmittelabfluss derart verbunden ist, dass das Kühlmittel axial in den Kühlmantel einführbar und aus dem Kühlmantel abführbar ist, wobei der Kühlmittelzufluss und der Kühlmittelabfluss in Umfangsrichtung nebeneinander angeordnet sind und durch sich in Umfangsrichtung erstreckende Kühlmittelkanäle jeweils strömungstechnisch mit einem dem Kühlmittelzufluss diametral gegenüberliegenden Umlenkabschnitt verbunden sind, wobei in den Kühlmantel eingeleitetes Kühlmittel in zwei Teilströmen mit entgegengesetzten Strömungsrichtungen durch einen Vorlauf bildende Kühlmittelkanäle zum Umlenkabschnitt strömt und derart umgelenkt wird, dass das Kühlmittel durch zumindest einen einen Rücklauf bildenden Kühlmittelkanal zum Kühlmittelabfluss zurückströmt, wobei der zumindest eine Kühlmittelkanal des Rücklaufs und der axial benachbarte Kühlmittelkanal des Vorlaufs gegensinnig durchströmbar sind. Durch die erfindungsgemäße, insbesondere parallelisierte Führung des Kühlmittels innerhalb des geschlossenen Kühlmantels und die axiale Anordnung der Anschlüsse für das Kühlmittel wird auf engstem Bauraum eine günstige Umströmung des zu kühlenden Stators der elektrischen Maschine gewährleistet. Weiterhin wird durch die axiale Einleitung und Entfernung des Kühlmittels in bzw. aus dem Kühlmantel ermöglicht, sowohl den Kühlmittelzufluss als auch den Kühlmittelabfluss axial am Gehäuse der elektrischen Maschine, und zwar unmittelbar nebeneinander, anzuordnen. Hierdurch ergibt sich eine verbesserte Nutzung des zur Verfügung stehenden Bauraums, beispielsweise für Peripheriebauteile. Weiterhin kann durch die erfindungsgemäße Ausgestaltung eine sogenannte 180°-Kühlung realisiert werden, bei welcher das Kühlmittel in zwei Teilströmen jeweils nur die Hälfte des Umfangs des Gehäuses der elektrischen Maschine umströmt. Diese 180°-Kühlung hat gegenüber einer 360°-Kühlung, in welcher das Kühlmittel das Gehäuse vollumfänglich umströmt, insbesondere hinsichtlich der Kühlleistung, der Kühlleistungsverteilung und der Kühlwirkung erhebliche Vorteile. Erfindungsgemäss ist vorgesehen, dass das Kühlmittel durch den Umlenkabschnitt in zwei Teilströme mit entgegengesetzten Strömungsrichtungen umlenkbar ist und die beiden Teilströme durch zugeordnete Kühlmittelkanäle des Rücklaufs zu dem zumindest einen Kühlmittelabfluss führbar sind. Das Umlenken des Kühlmittels erfolgt beispielsweise mittels eines oder mehrerer Leitelemente, welche die Strömungsrichtung der beiden von dem Kühlmittelzufluss kommenden Teilströme des Kühlmittels um 180° umlenkt und zurück zum Kühlmittelabfluss strömen lässt. Hierbei ist das Leitelement vorzugsweise derart ausgebildet, dass Turbulenzen bei der Umlenkung verhindert werden, um die Strömung des Kühlmittels nicht zu beeinträchtigen. Durch eine derartige Ausgestaltung wird also eine bauraumoptimierte und besonders effektive Kühlung des Gehäuses bzw. des im Gehäuse angeordneten Stators der elektrischen Maschine gewährleistet. Erfindungsgemäss wird eine besonders kompakte Ausgestaltung der elektrischen Maschine auch dadurch erreicht, dass der Rücklauf zumindest zwei in einer gemeinsamen axialen Ebene angeordnete Kühlmittelkanäle aufweist, welche bevorzugt jeweils mit einem separaten Kühlmittelabfluss verbunden sind, wobei der Kühlmittelzufluss bevorzugt in Umfangsrichtung zwischen den beiden Kühlmittelabflüssen angeordnet ist.

Die im Betrieb der elektrischen Maschine entstehende Abwärme wird erfindungsgemäss dadurch besonders effektiv abgeführt, dass der Vorlauf und/oder der Rücklauf jeweils zumindest zwei oder mehrere in axialer Richtung nebeneinander angeordnete Kühlmittelkanäle aufweist. Die Kühlmittelkanäle bilden sich durch in das Gehäuse eingearbeitete oder mit dem Gehäuse verbundene bzw. an einer Umfangsfläche des Gehäuses fixierte Rippen oder Stege aus. In radialer Richtung werden die Kühlmittelkanäle von dem das Gehäuse konzentrisch umgebenden, zylindrischen Mantel begrenzt. Außerdem ist der das Gehäuse konzentrisch umgebende Mantel flüssigkeitsdicht mit dem Gehäuse verbunden. Hierfür sind in den Randbereichen des Gehäuses den Mantel dichtend kontaktierende und ringförmig umlaufende ausgebildete Stege vorgesehen, welche den Kühlmantel in axialer Richtung flüssigkeitsdicht abschließen, wobei der Kühlmittelzufluss und der bzw. die Kühlmittelabflüsse den umlaufenden und den Kühlmantel abdichtenden Steg unterwandern, um das Kühlmittel in den Kühlmantel einzuleiten bzw. aus dem Kühlmantel zu entfernen. Erfindungsgemäss wird eine gleichmäßige Verteilung des in den Kühlmantel eingeleiteten Kühlmittels auf die nebeneinander angeordneten, den Vorlauf bildenden Kühlmittelkanäle dadurch erreicht, dass dem zumindest einen Kühlmittelzufluss ein Einführabschnitt zugeordnet ist, welcher sich in axialer Richtung erstreckt und strömungstechnisch mit den sich in Umfangsrichtung beidseitig des Einführabschnitts erstreckenden Kühlmittelkanälen des Vorlaufs verbunden ist. Das in den Kühlmantel einströmende Kühlmittel wird hierdurch gleichmäßig auf die in axialer Richtung benachbarten und beidseitig des Einführabschnitts angeordneten Kühlmittelkanäle verteilt, wodurch das Gehäuse und dadurch der Stator gleichmäßig gekühlt werden. Der Einführabschnitt ist dabei als Verteilkanal ausgebildet und kann strömungsoptimiert ausgebildet sein und/oder ein oder mehrere Leitelemente zur besseren Verteilung des Kühlmittels auf die Kühlmittelkanäle aufweisen.

In diesem Fall erweist es sich als besonders zweckmäßig, wenn zwischen dem Kühlmittelzufluss und den beiden in Umfangsrichtung benachbart angeordneten Kühlmittelabflüssen eine flüssigkeitsdichte Sperreinrichtung vorgesehen ist. Hierdurch wird verhindert, dass in den Kühlmantel eingeleitetes Kühlmittel ohne Durchströmung der Kühlmittelkanäle durch den Kühlmittelabfluss wieder aus dem Kühlmantel austritt bzw. dass sich das im Rücklauf zum Kühlmittelabfluss strömende Kühlmittel mit dem einströmenden Kühlmittel vermischt. Gleichzeitig leitet das Sperrelement das in Umfangsrichtung durch den Rücklauf in Richtung des Kühlmittelabflusses strömende Kühlmittel in axiale Richtung um, sodass dieses in axialer Richtung durch den Kühlmittelabfluss aus dem Kühlmantel abgeführt werden kann.

Ein weiteres erfindungsgemäßes Merkmal zeichnet sich dadurch aus, dass sich der Umlenkabschnitt in axialer Richtung erstreckt und die Kühlmittelkanäle des Vorlaufs und die Kühlmittelkanäle des Rücklaufs strömungstechnisch verbindet, wobei der Umlenkabschnitt bevorzugt ein Leitelement aufweist, welches das Kühlmittel umlenkt und den Umlenkabschnitt in zwei flüssigkeitsdicht getrennte Strömungsbereiche unterteilt. Hierdurch werden die beiden von dem Einführabschnitt in den Umlenkabschnitt einströmenden Teilströme des Kühlmittels in dem jeweiligen Strömungsbereich um 180° umgelenkt, sodass die beiden Teilströme den Umlenkabschnitt durch die mit dem jeweiligen Strömungsbereich verbundenen Kühlmittelkanäle des Rücklaufs wieder in Richtung des jeweiligen Kühlmittelabfluss verlassen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine elektrische Maschine mit einem Gehäuse in einer teilweise geschnittenen perspektivischen Darstellung;
- Fig. 2: eine um 180° gedrehte Darstellung der in Figur 1 dargestellten elektrischen Maschine.

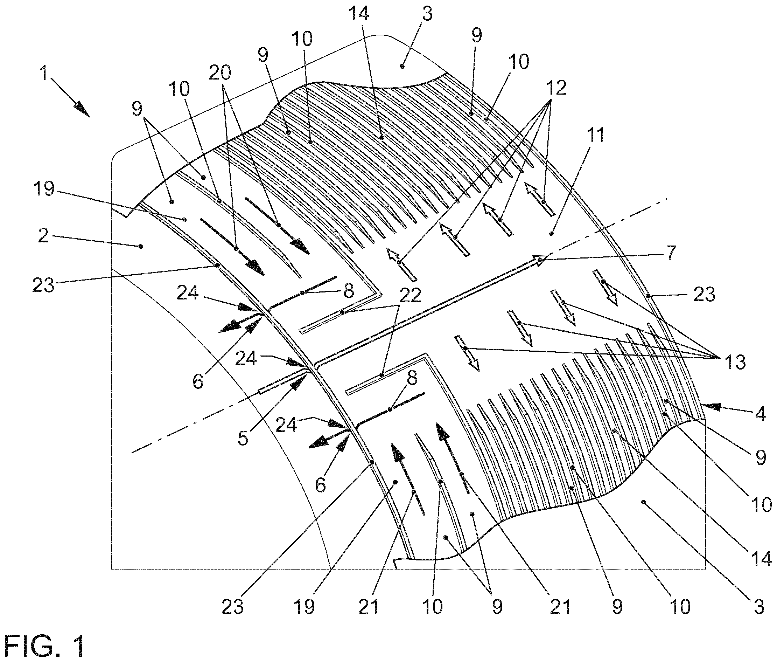

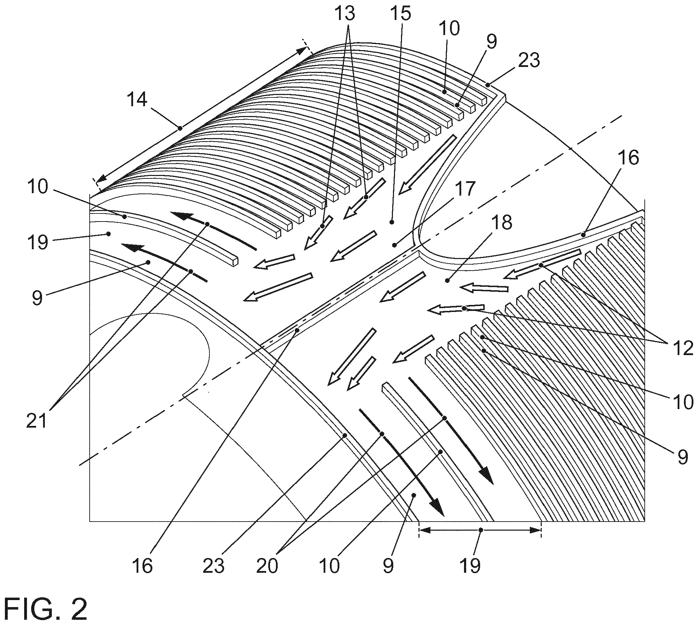

Figur 1 zeigt eine elektrische Maschine 1, insbesondere für den Hybridantrieb eines Fahrzeugs, mit einem einen nicht dargestellten Stator aufnehmenden zylindrischen Gehäuse 2. Figur 2 zeigt eine um 180° um eine Längsachse der elektrischen Maschine 1 gedrehte Darstellung der in Figur 1 dargestellten elektrischen Maschine 1.

Das zylindrische Gehäuse 2 der elektrischen Maschine 1 ist außenseitig derart von einem hülsenförmigen Mantel 3 umschlossen, dass sich zwischen dem Gehäuse 2 und dem Mantel 3 ein ringförmiger, flüssigkeitsdicht abgeschlossener und mit einem Kühlmittel durchströmbarer Kühlmantel 4 ausbildet. Der Kühlmantel 4 ist mit einem Kühlmittelzufluss 5 und zwei Kühlmittelabflüssen 6 verbunden, durch welche das Kühlmittel axial in den Kühlmantel 4 einführbar und auch axial aus dem Kühlmantel 4 abführbar ist. Das axiale Einführen des Kühlmittels durch den Kühlmittelzufluss 5 in den Kühlmantel 4 ist in Figur 1 durch einen Richtungspfeil 7 und das axiale Abführen des Kühlmittels durch die Kühlmittelabflüsse 6 aus dem Kühlmantel 4 durch zwei Richtungspfeile 8 dargestellt. Der Kühlmittelzufluss 5 und die beiden Kühlmittelabflüsse 6 sind in Umfangsrichtung des Gehäuses 2 nebeneinander angeordnet, wobei die beiden Kühlmittelabflüsse 6 den Kühlmittelzufluss 5 zwischen sich aufnehmen. Die Kühlmittelabflüsse 6 bzw. der Kühlmittelzufluss 5 sind mit in den beiden Figuren nicht dargestellten Rohr- oder Schlauchverbindungen ausgestattet.

Der Kühlmantel 4 weist mehrere in axialer Richtung nebeneinander angeordnete und sich in Umfangsrichtung des Gehäuses 2 erstreckende Kühlmittelkanäle 9 auf, welche sich zwischen Rippen 10 ausbilden, die auf dem Außenumfang des Gehäuses 2 angeordnet bzw. fixiert sind. Selbstverständlich können die Rippen 10 auch in die äußere Oberfläche des Gehäuses 2 eingebracht oder an der Innenfläche des das Gehäuse 2 umgebenden Mantels 3 angeordnet sein.

Der Kühlmittelzufluss 5 ist mit einem sich in axialer Richtung erstreckenden Einführabschnitt 11 strömungstechnisch verbunden, welcher das in den Kühlmantel 4 axial eingeleitete Kühlmittel in zwei Teilströmen 12, 13, welche entgegengesetzte Strömungsrichtungen aufweisen, gleichmäßig auf die beidseitig des Einführabschnitts 11 angeordneten und einen Vorlauf 14 bildenden Kühlmittelkanäle 9 verteilt.

Der Einführabschnitt 11 bzw. der Kühlmittelzufluss 5 ist über die Kühlmittelkanäle 9 des Vorlaufs 14 mit einem diametral gegenüberliegend angeordneten Umlenkabschnitt 15 verbunden, welcher in Figur 2 dargestellt ist. Der sich in axialer Richtung erstreckende Umlenkabschnitt 15 weist für die Umlenkung des einströmenden Kühlmittels, also der beiden Teilströme 12, 13, ein Leitelement 16 auf. Das Leitelement 16 teilt den Umlenkabschnitt 15 in zwei flüssigkeitsdicht voneinander getrennte Strömungsbereiche 17, 18. Die beiden Strömungsbereiche 17, 18 sind jeweils durch einen Rücklauf 19 bildende Kühlmittelkanäle 9 mit einem der beiden Kühlmittelabflüsse 6 verbunden.

Das durch die Kühlmittelkanäle 9 des Vorlaufs14 in den Umlenkabschnitt 15 bzw. in die beiden Strömungsbereiche 17, 18 des Umlenkabschnitts 15 einströmende Kühlmittel wird im Bereich des Umlenkabschnitts 15, insbesondere durch das Leitelement 16, in zwei Teilströme 20, 21 mit entgegengesetzten Strömungsrichtungen umgelenkt und durch die Kühlmittelkanäle 9 des Rücklaufs 19 zu dem jeweiligen Kühlmittelabfluss 6 geführt. Die Kühlmittelkanäle 9 des Vorlaufs 14 und die Kühlmittelkanäle 9 des Rücklaufs 19 werden hierbei gegensinnig durchströmt.

Zwischen dem Kühlmittelzufluss 5 und den beiden in Umfangsrichtung benachbart angeordneten Kühlmittelabflüssen 6 ist eine flüssigkeitsdichte Sperreinrichtung 22 vorgesehen. Durch die Sperreinrichtung 22 wird gewährleistet, dass das in den Kühlmantel 4 eingeleitete Kühlmittel zu den Kühlmittelkanälen 9 des Vorlaufs 14 geführt wird. Gleichzeitig sorgt die Sperreinrichtung 22 dafür, dass das durch den Rücklauf 19 in Richtung der Kühlmittelabflüsse 6 und in Umfangsrichtung strömende Kühlmittel in axiale Richtung umgeleitet wird, sodass es durch die Kühlmittelabflüsse 6 aus dem Kühlmantel 4 abgeführt werden kann.

Wie eingangs bereits beschrieben ist der das Gehäuse 2 konzentrisch umgebende Mantel 3 flüssigkeitsdicht mit dem Gehäuse 2 verbunden. Hierfür sind in den Randbereichen des Gehäuses 2 ringförmige und umlaufend ausgebildete Stege 23 vorgesehen, welche eine Innenfläche des Mantels 3 dichtend kontaktieren und hierdurch den Kühlmantel 4 in axialer Richtung flüssigkeitsdicht abschließen. Für das Zuführen bzw. das Abführen des Kühlmittels in bzw. aus dem Kühlmantel ist ein den Steg 23 unterwandernder Kanal 24, beispielsweise eine Durchbrechung oder Bohrung, vorgesehen.

### Bezugszeichenliste

- 1: elektrische Maschine
- 2: Gehäuse
- 3: Mantel
- 4: Kühlmantel
- 5: Kühlmittelzufluss
- 6: Kühlmittelabfluss
- 7: Richtungspfeil
- 8: Richtungspfeil
- 9: Kühlmittelkanal
- 10: Rippe
- 11: Einführabschnitt
- 12: Teilstrom
- 13: Teilstrom
- 14: Vorlauf
- 15: Umlenkabschnitt
- 16: Leitelement
- 17: Strömungsbereich
- 18: Strömungsbereich
- 19: Rücklauf
- 20: Teilstrom
- 21: Teilstrom
- 22: Sperreinrichtung
- 23: Steg
- 24: Kanal

## Patentansprüche

1. Elektrische Maschine (1), insbesondere für den Hybridantrieb eines Fahrzeugs, mit einem Gehäuse (2) und einem das Gehäuse (2) konzentrisch umschließenden Mantel (3), wobei sich zwischen dem Gehäuse (2) und dem Mantel (3) ein ringförmiger, flüssigkeitsdicht abgeschlossener und mit einem Kühlmittel durchströmbarer Kühlmantel (4) erstreckt, welcher mit zumindest einem Kühlmittelzufluss (5) und zumindest einem Kühlmittelabfluss (6) derart verbunden ist, dass das Kühlmittel axial in den Kühlmantel (4) einführbar und aus dem Kühlmantel (4) abführbar ist, wobei der Kühlmittelzufluss (5) und der Kühlmittelabfluss (6) in Umfangsrichtung des Gehäuses (2) nebeneinander angeordnet sind und durch sich in Umfangsrichtung erstreckende Kühlmittelkanäle (9) jeweils strömungstechnisch mit einem dem Kühlmittelzufluss (5) diametral gegenüberliegenden Umlenkabschnitt (15) verbunden sind, wobei in den Kühlmantel (4) eingeleitetes Kühlmittel in zwei Teilströmen (12, 13) mit entgegengesetzten Strömungsrichtungen durch einen Vorlauf (14) bildende Kühlmittelkanäle (9) zum Umlenkabschnitt (15) strömt und derart umgelenkt wird, dass das Kühlmittel durch zumindest einen einen Rücklauf (19) bildenden Kühlmittelkanal (9) zum Kühlmittelabfluss (6) zurückströmt, wobei der zumindest eine Kühlmittelkanal (9) des Rücklaufs (19) und der axial benachbarte Kühlmittelkanal (9) des Vorlaufs (14) gegensinnig durchströmbar sind, wobei das Kühlmittel durch den Umlenkabschnitt (15) in zwei Teilströme (20, 21) mit entgegengesetzten Strömungsrichtungen umlenkbar ist und die beiden Teilströme (20, 21) durch zugeordnete Kühlmittelkanäle (9) des Rücklaufs (19) zu dem zumindest einen Kühlmittelabfluss (6) führbar sind, wobei der Rücklauf (19) zumindest zwei in einer gemeinsamen axialen Ebene angeordnete Kühlmittelkanäle (9) aufweist, wobei der Vorlauf (14) und der Rücklauf (19) jeweils zumindest zwei oder mehrere in axialer Richtung nebeneinander angeordnete Kühlmittelkanäle (9) aufweist, wobei dem zumindest einen Kühlmittelzufluss (5) ein Einführabschnitt (11) zugeordnet ist, welcher sich in axialer Richtung erstreckt und strömungstechnisch mit den sich in Umfangsrichtung beidseitig des Einführabschnitts (11) erstreckenden Kühlmittelkanälen (9) des Vorlaufs (14) verbunden ist und wobei sich der Umlenkabschnitt (15) in axialer Richtung erstreckt und die Kühlmittelkanäle (9) des Vorlaufs (14) und die Kühlmittelkanäle (9) des Rücklaufs (19) strömungstechnisch verbindet.

2. Elektrische Maschine (1) nach Anspruch 1, **dadurch gekennzeichnet, dass** die beiden in einer gemeinsamen axialen Ebene angeordneten Kühlmittelkanäle (9) des Rücklaufs (19) jeweils mit einem separaten Kühlmittelabfluss (6) verbunden sind.

3. Elektrische Maschine (1) nach zumindest einem der vorangehenden Ansprüche, **dadurch gekennzeichnet, dass** der Kühlmittelzufluss (5) in Umfangsrichtung zwischen den beiden Kühlmittelabflüssen (6) angeordnet ist.

4. Elektrische Maschine (1) nach zumindest einem der vorangehenden Ansprüche, **dadurch gekennzeichnet, dass** zwischen dem Kühlmittelzufluss (5) und den beiden in Umfangsrichtung benachbart angeordneten Kühlmittelabflüssen (6) eine flüssigkeitsdichte Sperreinrichtung (22) vorgesehen ist.

5. Elektrische Maschine (1) nach zumindest einem der vorangehenden Ansprüche, **dadurch gekennzeichnet, dass** der Umlenkabschnitt (15) ein Leitelement (16) aufweist, welches das Kühlmittel umlenkt und den Umlenkabschnitt (15) in zwei flüssigkeitsdicht getrennte Strömungsbereiche (17, 18) unterteilt.

## Claims

1. Electric machine (1), in particular for the hybrid drive of a vehicle, having a housing (2) and a shell (3) which encloses the housing (2) concentrically, an annular cooling jacket (4) which is closed in a liquid-tight manner and can be flowed through by a coolant extending between the housing (2) and the shell (3), which cooling jacket (4) is connected to at least one coolant inflow (5) and at least one coolant outflow (6) in such a way that the coolant can be axially introduced into the cooling jacket (4) and discharged from the cooling jacket (4), the coolant inflow (5) and the coolant outflow (6) being arranged next to one another in the circumferential direction of the housing (2) and being connected in each case in terms of flow to a deflection section (15) which lies diametrically opposite the coolant inflow (5) by way of coolant ducts (9) which extend in the circumferential direction, coolant which is introduced into the cooling jacket (4) flowing in two part flows (12, 13) with opposed flow directions through coolant ducts (9) which form a feed line (14) to the deflection section (15) and being deflected in such a way that the coolant flows back to the coolant outflow (6) through at least one coolant duct (9) which forms a return line (19), it being possible for the at least one coolant duct (9) of the return line (19) and the axially adjacent coolant duct (9) of the feed line (14) to be flowed through in opposite directions, it being possible for the coolant to be deflected by way of the deflection section (15) in two part flows (20, 21) with opposed flow directions, and it being possible for the two part flows (20, 21) to be guided to the at least one coolant outflow (6) through associated coolant ducts (9) of the return line (19), the return line (19) having at least two coolant ducts (9) which are arranged in a common axial plane, the feed line (14) and the return line (19) having in each case at least two or more coolant ducts (9) which are arranged next to one another in the axial direction, the at least one coolant inflow (5) being assigned an introduction section (11) which extends in the axial direction and is connected in terms of flow to the coolant ducts (9) of the feed line (14) which extend in the circumferential direction on both sides of the introduction section (11), and the deflection section (15) extending in the axial direction and connecting the coolant ducts (9) of the feed line (14) and the coolant ducts (9) of the return line (19) in terms of flow.

2. Electric machine (1) according to Claim 1, **characterized in that** the two coolant ducts (9) of the return line (19) which are arranged in a common axial plane are connected in each case to a separate coolant outflow (6).

3. Electric machine (1) according to at least one of the preceding claims, **characterized in that** the coolant inflow (5) is arranged between the two coolant outflows (6) in the circumferential direction.

4. Electric machine (1) according to at least one of the preceding claims, **characterized in that** a liquid-tight shut-off device (22) is provided between the coolant inflow (5) and the two coolant outflows (6) which are arranged adjacently in the circumferential direction.

5. Electric machine (1) according to at least one of the preceding claims, **characterized in that** the deflection section (15) has a guiding element (16) which deflects the coolant and divides the deflection section (15) into two flow regions (17, 18) which are separated in a liquid-tight manner.

## Revendications

1. Machine électrique (1), en particulier pour l'entraînement hybride d'un véhicule, comprenant un boîtier (2) et une enveloppe (3) entourant concentriquement le boîtier (2), une enveloppe de refroidissement (4) annulaire, étanche aux liquides, fermée et pouvant être parcourue par un fluide de refroidissement s'étendant entre le boîtier (2) et l'enveloppe (3), laquelle est connectée à au moins une alimentation en fluide de refroidissement (5) et à au moins une évacuation de fluide de refroidissement (6), de telle sorte que le fluide de refroidissement puisse être introduit axialement dans l'enveloppe de refroidissement (4) et puisse être évacué hors de l'enveloppe de refroidissement (4), l'alimentation en fluide de refroidissement (5) et l'évacuation de fluide de refroidissement (6) étant disposées l'une à côté de l'autre dans la direction périphérique du boîtier (2) et étant connectées par des canaux de fluide de refroidissement (9) s'étendant dans la direction périphérique à chaque fois par une technique fluidique à une section de déviation (15) diamétralement opposée à l'alimentation en fluide de refroidissement (5), du fluide de refroidissement introduit dans l'enveloppe de refroidissement (4) s'écoulant dans deux flux partiels (12, 13) dans des directions d'écoulement opposées à travers des canaux de fluide de refroidissement (9) formant une section d'entrée (14) vers la portion de déviation (15) et étant dévié de telle sorte que le fluide de refroidissement reflue vers l'évacuation de fluide de refroidissement (6) par au moins un canal de fluide de refroidissement (9) formant une section de retour (19), l'au moins un canal de fluide de refroidissement (9) de la section de retour (19) et le canal de fluide de refroidissement axialement adjacent (9) de la section d'entrée (14) pouvant être parcourus en sens inverse par l'écoulement, le fluide de refroidissement pouvant être dévié par la section de déviation (15) en deux flux partiels (20, 21) ayant des sens d'écoulement opposés et les deux flux partiels (20, 21) pouvant être guidés par des canaux de fluide de refroidissement associés (9) de la section de retour (19) jusqu'à l'au moins une évacuation de fluide de refroidissement (6), la section de retour (19) présentant au moins deux canaux de fluide de refroidissement (9) disposés dans un plan axial commun, la section d'entrée (14) et la section de retour (19) présentant chacune au moins deux ou plus de deux canaux de fluide de refroidissement (9) disposés les uns à côté des autres dans la direction axiale, une section d'introduction (11) étant associée à l'au moins une alimentation en fluide de refroidissement (5), laquelle s'étend dans la direction axiale et est connectée par une technique d'écoulement aux canaux de fluide de refroidissement (9) de la section d'entrée (14) s'étendant dans la direction périphérique des deux côtés de la section d'introduction (11), et la section de déviation (15) s'étendant dans la direction axiale et reliant les canaux de fluide de refroidissement (9) de la section d'entrée (14) et les canaux de fluide de refroidissement (9) de la section de retour (19) par une technique fluidique.

2. Machine électrique (1) selon la revendication 1, **caractérisée en ce que** les deux canaux de fluide de refroidissement (9) de la section de retour (19) disposés dans un plan axial commun sont chacun connectés à une évacuation de fluide de refroidissement séparée (6).

3. Machine électrique (1) selon au moins l'une quelconque des revendications précédentes, **caractérisée en ce que** l'alimentation en fluide de refroidissement (5) est disposée dans la direction périphérique entre les deux évacuations de fluide de refroidissement (6).

4. Machine électrique (1) selon au moins l'une quelconque des revendications précédentes, **caractérisée en ce qu'**entre l'alimentation en fluide de refroidissement (5) et les deux évacuations de fluide de refroidissement (6) disposées en position adjacente dans la direction périphérique, est prévu un dispositif de blocage étanche aux liquides (22).

5. Machine électrique (1) selon au moins l'une quelconque des revendications précédentes, **caractérisée en ce que** la section de déviation (15) présente un élément de guidage (16) qui dévie le fluide de refroidissement et qui divise la section de déviation (15) en deux régions d'écoulement séparées de manière étanche aux liquides (17, 18).
